# EUROPEAN PATENT SPECIFICATION

(11) **EP 3 131 809 B1**
(45) Date of publication and mention of the grant of the patent: **14.03.2018**
(21) Application number: 15751070.2
(22) Date of filing: 10.04.2015
(51) Int. Cl.: B63C 11/18, F16L 37/00, F16L 37/06

(54) **STRUCTURE OF UMBELICAL FOR CONNECTING A DIVER WITH A DIVING SUPPORT SHIP AND/OR A DIVING BELL**
STRUKTUR EINES VERSORGUNGSSCHLAUCHS ZUR VERBINDUNG EINES TAUCHERS MIT EINEM TAUCHUNTERSTÜTZUNGSSCHIFF UND/ODER EINER TAUCHGLOCKE
STRUCTURE D'OMBILICAL DESTINÉE À RELIER UN PLONGEUR À UN NAVIRE SUPPORT DE PLONGÉE ET/OU À UNE CLOCHE DE PLONGÉE

(30) Priority: 14.04.2014 IT PI20140029
(43) Date of publication of application: 22.02.2017
(73) Proprietor: C.N.S. International Srl, 54033 Avenza Carrara (MS) (IT); CNR Consiglio Nazionale Delle Ricerche, 00185 Roma (IT); Bedini, Remo, 56124 Pisa (IT); Laurino, Marco, 85100 Potenza (IT)
(72) Inventor: BEDINI, Remo, 56124 Pisa (IT); LAURINO, Marco, 85100 Potenza (IT); CINI, Davide, 73100 Pisa (IT); MAGRIN, Adolfo, 54033 Carrara (IT); MICHELETTI, Fabio, 73100 Pisa (IT)
(74) Representative: Celestino, Marco
(86) International application number: PCT/IB2015/052615
(87) International publication number: WO 2015/159191

(56) References cited:
- GB-A- 2 216 972
- US-A- 4 555 130

## Description

The present invention relates to the field of diver's safety, so-called "CCD", i.e. Certified Commercial Diver, who operate both in shore and in off-shore. The CCD are equipped with an integral helmet and a system of cables and ducts also called "umbelical" through which a breathable mixture is supplied to the diver, optionally a recovery line of the exhaled, and through which an audio and video connection is obtained between the diver and a support ship, or sometimes a support platform, in addition to *"pneumo"* lines (simple ducts that are open in the depth to reproduce the pressure of the depth to manometers at the surface and/or in the bell) for the absolute measure of the operating depth.

### Description of the prior art

As well known, in the professional underwater activities, both of *in-shore* and *off-shore* type, the use is compulsory of the umbelical and of the integral helmet through which a *"full duplex"* audio and video communication with the direction of the works positioned at the surface is obtained. In particular, the umbelical is connected to the survival plant on the support ship or directly (operation that is generally "in-shore" (within 50 metres), or to a diving bell that is lowered in the water with 2, or 3, CCD as crew up to the working depth. The bell is in its turn connected to the support ship with an umbelical that carries breathable gas, communications and hot water for heating the diving suits of all the divers operating out of the bell (2 in case of 3 CCD, 1 in case of 2 divers, since at least one diver has to remain in bell as Tender).

In *off-shore,* i.e. beyond 50 metres of depth, or in cold waters, the divers uses always and in any case wet diving suits, in which it is conveyed hot water at an operating temperature of about 35-40° centigrade, through the umbelical connected to a safety bell. This, in its turn, is connected by means of an its main umbelical to the support ship. The hot water is produced by means of appropriate boilers, also known in the jargon of the field as "donkey boilers", mounted on the support ship. The tube of the hot water usually runs close to the tube of the breathable mixture, normally Heliox (helium as diluent and oxygen in an amount that is compatible with the working depth), both in the umbelical connected from the ship to the bell for carrying the diver to the working depth, both in the umbelicals of the operating divers connected to the bell. The heat of the water contributes to heat also the breathable mixture, which, in particular in case of Heliox, produces a high loss of the body heat. The umbelical usually comprises also a duct for recovering the gas breathed out *"reclaim"* in order to allow a recovering of the inert gas, i.e. of the helium, by the plants of the support ship, where the mixture breathed out is reintegrated with oxygen after having removed carbon dioxide by means of soda lime filters.

The diver is always in audio communication with the surface operator (*"Supervisor"*) who controls also visually the working environment in a monitor that reproduces what is shot by the video camera mounted on the helmet of the diver.

A possible, and potentially serious incident underwater, in the field of the operations of these professional divers, is due to the loss of control of stability and position of the ship that holds the safety bell to which the divers are connected, through a geo-detection system using GPS and hydrodynamic stabilizers. It is, in fact, necessary that the support ship does not exceed in the movement due to the waves, currents and winds (since it is not moored, and for other reasons) tolerances that are fixed by the bay of the umbelical that connects the bell to the divers.

An important drift of the watercraft causes in fact the conveying of the bell and therefore of the divers who are linked to it. This event can cause an *"uncontrolled ascent"* of the divers, i.e. a quick rise of the dip depth, or in particular the shearing of the umbelical with serious risk for the safety of the diver who cannot withdraw with the bombolino of emergency worn (about 5 min of range of the batteries at a depth of 200 metres), in the bell "*alla deriva"* and that in any case changes of coordinates quickly with the comes from of the support ship.

An attempt to exceed this type of drawback is disclosed in US 4 555 130. In particular, the solution proposed provides a device for disconnection quick between the two portions of the umbelical located upstream and downstream of the device same.

However, the device described in US 4 555 130 has some drawbacks.

Firstly, in fact, the engagement between the two parts of the device for disconnection is made by a bolt arranged, in use, in a housing that crosses both the parts of the device.

However, this solution, on one hand is not capable to satisfy the necessary safety conditions, since it cannot ensure a steady fastening between the two parts of the device. Furthermore, the pin arranged in the housing is not easily and quickly extractable for an operator especially in the excited steps like those in which a sudden incident occurs that requires the separation of the two parts of the umbelical, also having only one hand available.

### Summary of the invention

It is then a feature of the present invention to provide a structure of umbelical for connecting a diver with a support ship and/or a safety diving bell arranged to overcome the above described drawbacks of the prior art.

It is, in particular, a feature of the present invention to provide a structure of umbelical that can ensure a steady fastening between the two parts of the same positioned upstream and downstream of the connection device in operating conditions, without mechanical constraints such as pins, screws, split pins, or similar devices.

It is also a feature of the present invention to provide a structure of umbelical that can be, in any case, easily and quickly moved from an assembled configuration to a disassembled configuration for separating the diver from the support ship and/or from the safety diving bell, without working directly on mechanical parts of connection.

It is another feature of the present invention to provide a structure of umbelical for connecting easily and quickly the part of the umbelical on the diver's side, to an emergency breathing structure.

These and other objects are achieved by a structure of umbelical arranged to connect a diver, in particular a CCD "Certified Commercial Diver", with a support ship and/or with a safety diving bell, said umbelical comprising at least:
- a duct crossed, in use, by a breathable gaseous mixture that is supplied to the diver;
- a duct crossed, in use, by a breathed out flow produced by the diver during the breathing of the breathable mixture;
- an electric cable through which electric energy is supplied to the diver;
- a pneumatic connection device arranged to connect in a removable way a first portion of said umbelical that, in use, is arranged on the side of the diving bell and/or of the support ship, and a second portion of said umbelical that, in use, is arranged on the diver's side, said connection device comprising a first portion and a second portion engaging in a removable way, in order to move from an assembled configuration to a disassembled configuration, each of said first and of said second portion being equipped with a plurality of cavities, in each cavity housing, in use, a respective portion of said ducts, or of said cable;
whose main feature is that the connection device is provided with at least one passage, or meatus, defined between a face of the first portion and a face of the second portion of the connection device arranged in the above described assembled configuration, said passage, or meatus, extending up to a hole made on the outer surface of the connection device, in said meatus be present a first predetermined pressure P1, with P1 that is less, or equal, than the atmospheric pressure;
and that the structure of umbelical furthermore comprises:
- a source of a gas at a predetermined pressure P2 with P2>P1;
- a valve arranged to pneumatically connect, or disconnect, said source of pressurized gas and said passage, or meatus, said valve for connecting, or disconnecting, arranged to connect said source of gas with said passage for increasing the pressure that is present in said meatus and to cause, then, the separation of said first portion from said second portion of said connection device for causing the movement of said connection device from said assembled configuration to said disassembled configuration.

In particular, the fact that in the meatus, or passage, a predetermined level of vacuum is present with respect to the outside ensures to provide a high tightening force between the first and the second portion of the connection device due to the pressure, i.e. to the working depth.

Preferably, the umbelical comprises also:
- a cable for at least one camera;
- a cable for audio communication, in particular of full duplex type, with the support ship and preferably with the tender, i.e. a second diver who is accommodated in the bell.

Preferably, in the meatus a predetermined vacuum level, or low pressure is present. In particular, the predetermined vacuum level in the meatus can be made when the connection device is arranged in an assembled configuration, i.e. with the first portion engaging with the second portion, by means of a suction device, for example a vacuum pump.

In particular, the outer surface of the connection device has a hole of predetermined size in pneumatic connection with said meatus, or passage, through which said meatus is adapted to be put in pneumatic connection with said suction device, to provide the predetermined vacuum level inside and ensuring a steady fastening between the two portions, or with the above described source of pressurized gas, to provide the separation of the first portion from the second portion.

Advantageously, a sealing element is provided between each cavity of said first and of said second portion of said connection device and the respective duct arranged to be crossed, in use, by a fluid, such as the mixture of breathable gas, or the hot water for heating the diving suit worn by the diver.

In a particularly advantageous embodiment of the invention, the sealing element comprises:
- a fixing portion arranged to be fixed to one between said first and said second portion of said connection device;
- a central portion arranged, in use, between the first and the second portion of the connection device, said central portion being equipped with a flange that, in operating conditions, i.e. when the connection device is assembled, is clamped between the face of the first portion and the face of the second portion which define the meatus.

Advantageously between the first and the second portion at least one reference element is provided, for example a pin, or a key, arranged to precisely refer the relative positions of the first and of the second portion same when said connection device is assembled, in order to ensure a correct mutual positioning.

Advantageously, in the umbelical a duct can also be provided arranged to feed a flow of hot water at a predetermined temperature T* in the canalizations, or interstices, made in the diving suit. In this case, therefore, in each portion of the connection device a respective cavity is provided arranged to house, in use, a respective portion of said feeding duct of the flow of hot water.

In an exemplary embodiment of the invention, a device is provided for producing and conveying thermal power arranged to transfer to the water flow the thermal power that is necessary to bring it to the above described temperature T*.

According to the invention, the device for producing and conveying thermal power can be a fuel cell.

Alternatively, the device for producing and conveying thermal power can be a "boiler suited for the depth".

Another possibility provides to produce the thermal power that is necessary to bring the flow of hot water to the temperature T* in a reactor in which the exothermic reaction of transformation of iron in iron hydroxide is carried out.

Preferably, between the first and the second portion a reference element is provided, for example a key, which is adapted to ensure a correct mutual positioning of the portions same.

In particular, the breathable mixture can be a mixture of helium and oxygen, also called "Heliox".

Advantageously, a protection cover is provided adapted to cover the connection device.

In particular, the protection cover is adapted to cover the face of the second portion of the connection device at the moment of the separation of the first portion from the second portion, in order to prevent sand, sludge, or other material from penetrating in the ducts connected to the second portion of the connection device jeopardizing the safety of the diver.

In an exemplary embodiment, the protection cover is made of a flexible material and is constrained to a support frame, which comprises:
- a fixing portion arranged to be fixed to said first portion of the connection device;
- a movable portion arranged to move from a cover configuration, in which it is tied around the outer surface of the connection device when this is in said assembled configuration, to a protection configuration, in which it covers the face of the second portion of the connection device, in order to-prevent objects from penetrating in the ducts through the free holes made in the face, when the connection device is arranged in the disassembled configuration.

Advantageously, the movable portion of the support frame is made of a material having shape memory and is arranged to move from the cover configuration in which it is forcedly kept by the first portion of the connection device in said assembled configuration, to the protection configuration in which the first portion of the connection device disengages from the second portion and therefore the movable portion is free to move in the above described protection configuration.

According to another aspect of the invention an emergency unit for assisting a diver in a danger situation comprises:
- a structure of umbelical as described above;
- a support structure;
- a delivery unit mounted on said support structure, said delivery unit comprising a plurality of bottles containing the mixture of breathable gas;
- a fastening member arranged to connect said delivery unit with said second portion of said connection device, in such a way to allow the diver to connect to said delivery unit and to allow, then to breath the above described breathable mixture.

Preferably, the fastening member of the emergency unit also comprises at least one electric connector arranged to be connected to the electric cable of the second portion of the connection device to provide also electricity to the diver. This way, it is possible to feed the lamp mounted on the helmet and restore the audio connection between the diver and the support ship. In the two parts of the assembled connector are also provided the connections for the video camera arranged on the helmet of the diver, that are not necessary for the connection to the safety cell.

The fastening member may also comprise a duct arranged to engage with the hot water feeding duct of the second portion of the connection device.

According to a further aspect of the invention, an assistance system for a diver comprises a structure of umbelical and an emergency unit as described above.

### Brief description of the drawings

The invention will be now shown with the following description of an exemplary embodiment thereof, exemplifying but not limitative, with reference to the attached drawings in which:
- Fig. 1 diagrammatically shows a structure of umbelical according to the invention;
- Fig. 2 diagrammatically shows an elevational side view of a connection device provided for the structure of umbelical of Fig. 1 in a disassembled configuration;

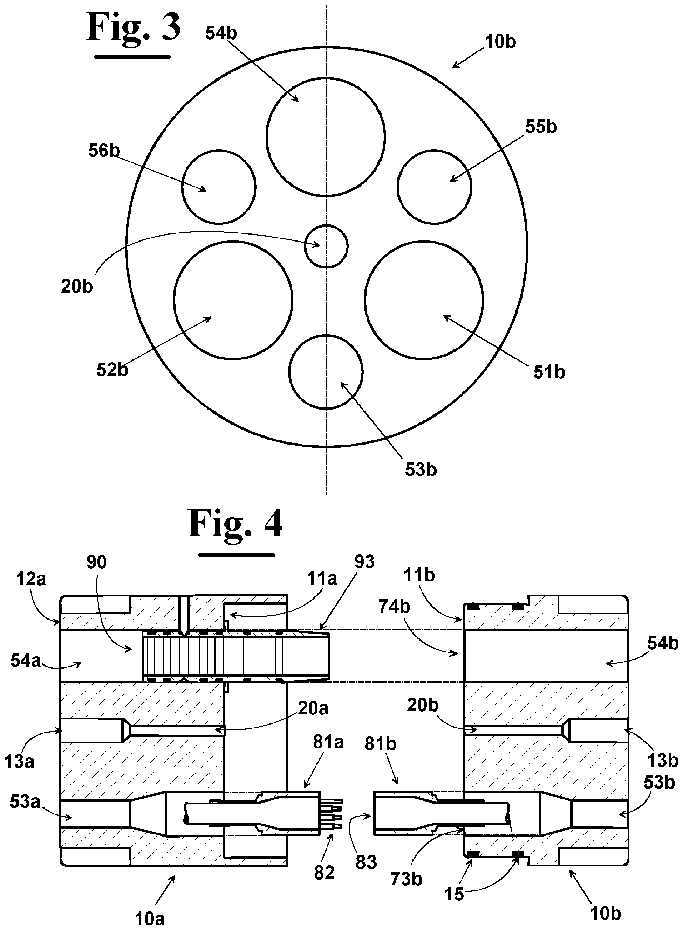

- Fig. 3 shows a top plan view of one of the two portions that compose the connection device of Fig. 2;
- Fig. 4 diagrammatically shows the connection device of Fig. 2 in a cross sectional view for highlighting some structural features of the same;

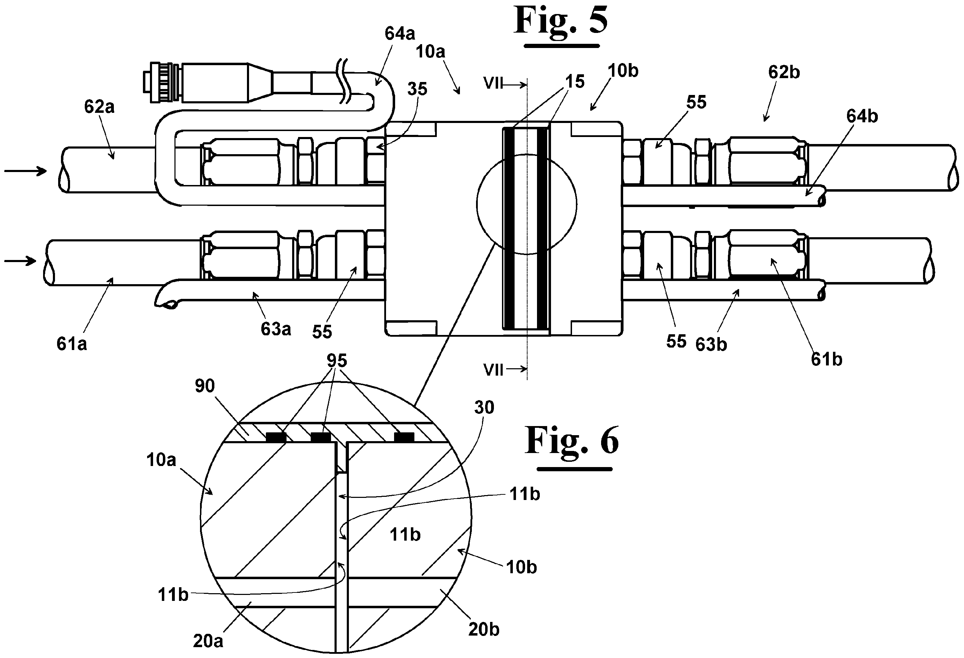

- Fig. 5 diagrammatically shows an elevational side view of the connection device of Fig. 2 in an assembled configuration;
- Fig. 6 diagrammatically shows a cross sectional view of a detail of the connection device of Fig. 4;
- Fig. 7 shows the connection device of Fig. 5 in a cross sectional view according to arrows VII-VII;
- Fig. 8 shows in detail the electric connector provided by the present invention in an elevational side view;
- Fig. 9 shows the connection device in a cross sectional view for highlighting further features;
- Fig. 10 diagrammatically shows the section of the structure of umbelical on the diver's side for highlighting some constituent components;
- Fig. 11 shows an elevational front view of an emergency unit provided by the present invention;
- Fig. 12 shows a top plan view of the emergency unit of Fig. 11;
- Figs. 13 and 14 diagrammatically show an elevational side view of the connection device having a protection cover, respectively, in a assembled configuration and in a disassembled configuration of the connection device;
- Figs. 15 and 16 diagrammatically show, respectively a cross sectional view and an elevational front view of the connection device provided with the protection cover respectively in a assembled configuration and in a disassembled configuration of the connection device.

### Detailed description of some exemplary embodiments

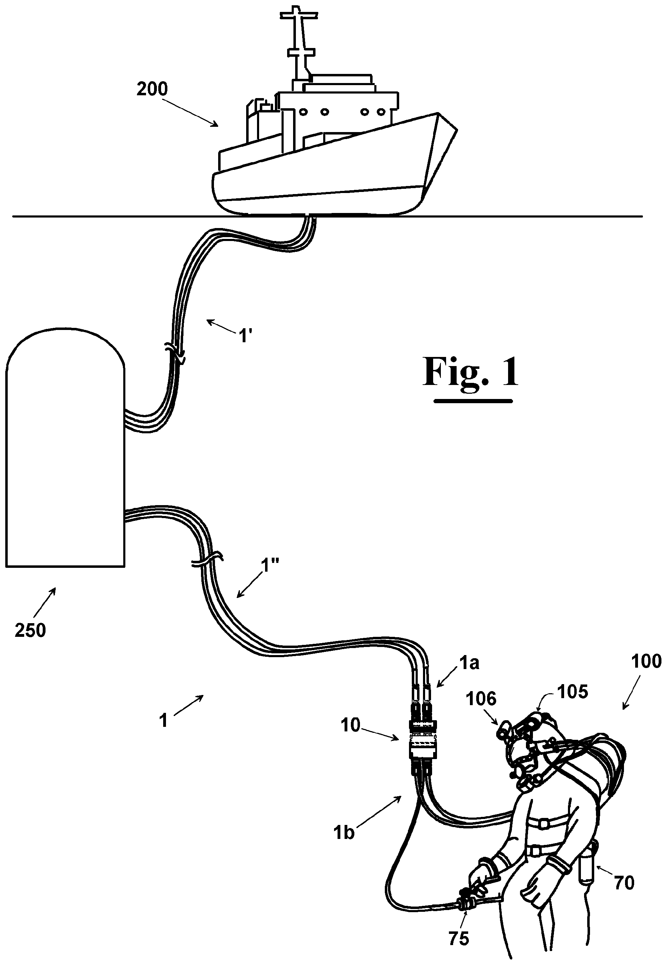

In Fig. 1 the structure of umbelical 1, according to the invention, is diagrammatically shown.

As well known, an umbelical 1 usually comprises a set of ducts and cables through which an underwater worker 100, in particular the helmet 110 of a "Certified Commercial Diver", or CCD, is connected to a support ship 200 and/or to a safety diving bell 250. More in detail, in the case shown in Fig. 1, the umbelical 1 comprises a first part 1' that connects the support ship 200 to a bell of safety 250 and a second part 1" that connects the bell of safety 250 to the helmet of the operator underwater 100. However, as described hereinafter the presence of the bell 250 is not necessary and the umbelical 1 can connect the helmet 110 directly to the support ship 200.

Among the ducts and the cables of the umbelical 1 at least one duct 61 is provided through which a breathable gaseous mixture is supplied to the diver 100, for example Heliox, i.e. a mixture of helium and oxygen, a duct 62 through which the gaseous mixture breathed out by the diver 100 is sucked and an electric cable 63 through which electric energy is supplied to the diver 100 for feeding a lamp 106 and allowing an audio communication between the diver 100 and the support ship 200.

According to the invention, the umbelical 1 also comprises at least one connection device 10 arranged to connect, in a removable way, a first portion 1a of the umbelical 1 that, in use, is arranged on the side of the diving bell 250 and/or the support ship 200, and a second portion 1b of the umbelical that, in use, is arranged on the diver's side 100.

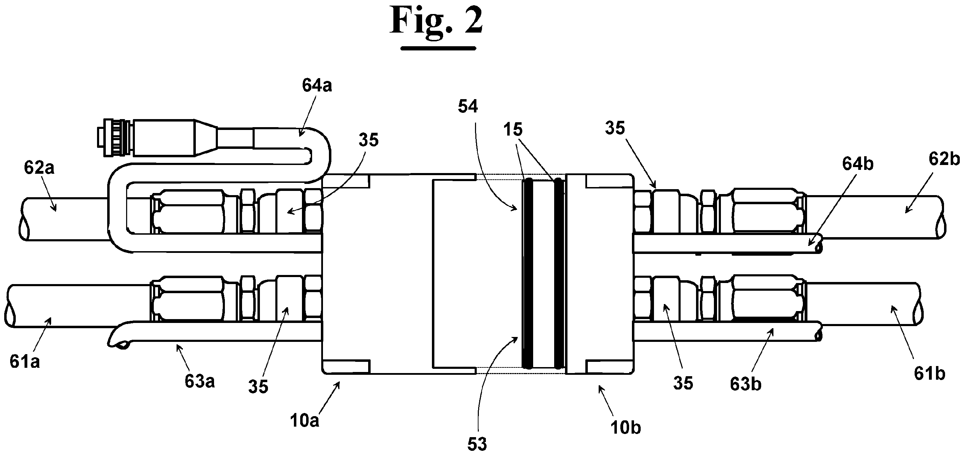

More in detail, as shown for example in Fig. 2, the connection device 10 comprises a first portion 10a and a second portion 10b arranged to engage with each other in a removable way. Each portion 10a and 10b of the connection device 10 has a predetermined number of cavities 51-56, each of which arranged to house, in use, respective ducts, or electric cables 61-66.

More in detail, each portion 10a, or 10b, has a cavity 51a, or 51b, in which, in use, a respective portion 61a, 61b, is housed of the feeding duct 61 of the breathable mixture, a cavity 52a, or 52b, arranged to house, in use, a respective portion 62a, 62b, of the duct 62 crossed by the flow breathed out by the diver 100.

The connection device 10, and, therefore, each portion 10a and 10b that form it, can also have other cavities arranged to house, for example, ducts in which, in use, the flow of hot water at a predetermined temperature T* passes through for heating the diving suit worn by the diver 100.

According to the invention, the connection device 10 is also provided with a passage 30, or meatus, defined, in use, between a face 11a of the first portion 10a and a face 11b of the second portion 10b. More in detail, in operating conditions, i.e. with the first portion 10a of the connection device 10 connected to the second portion 10b, a predetermined vacuum level is present in the meatus 30. For example, the vacuum level in the meatus 30 can be made, once the connection device 10 has been assembled, by means of an air suction device, such as a vacuum pump, for example a manual vacuum pump, not shown in the figures, which can be operated by the underwater worker 100 same. This way, between the first and the second portion 10a and 10b a high tightening force is obtained.

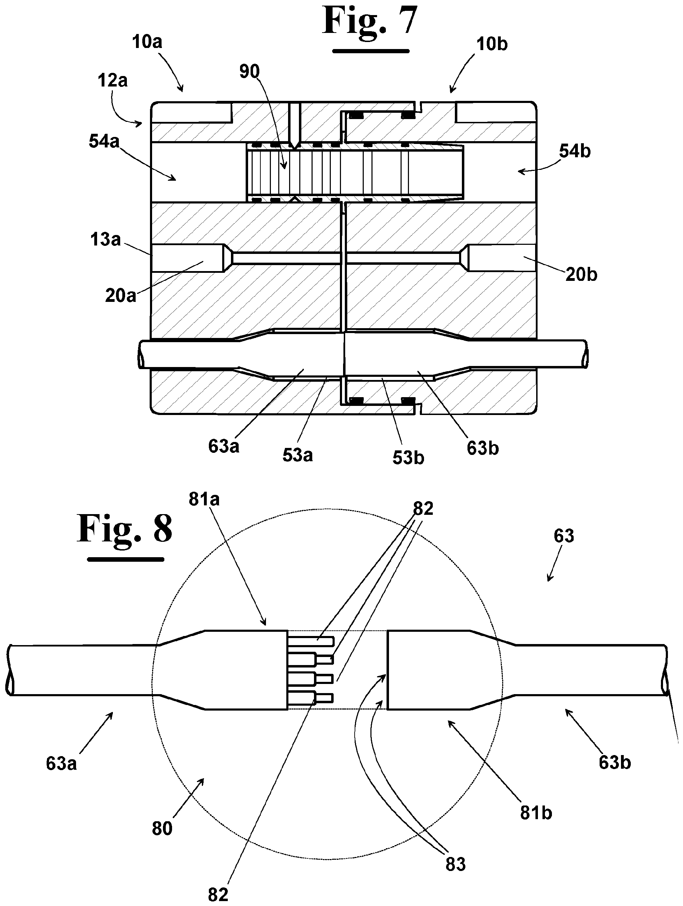

As shown in detail, for example in Fig. 7, at least one between the first portion 10a and the second portion 10b of the connection device 10 has a passage duct 20a, 20b, arranged to connect the meatus 30 with the outer surface 12a, or 12b of portion 10a, or 10b, of the connection device 10 at a hole 13a, or 13b. Through the hole 13a, or 13b, the meatus 30 is put in pneumatic connection with a suction device, to provide said predetermined vacuum level inside of it and, therefore, to ensure the steady fastening between the first and the second portion 10a and 10b. More in detail, when the connection device 10 is assembled, i.e. with the first and the second portion 10a and 10b mutually engaged one to the other, through said passage duct 20a, or 20b, air is sucked by the meatus 30 defined by the faces 11a and 11b opposite to the first and the second portions 10a and 10b. This way, predetermined vacuum level is obtained in the meatus 30 same that ensures a steady fastening between the first and the second portion 10a and 10b.

When the separation of the two portions 10a and 10b of the connection device 10 is carried out, it is sufficient to introduce air, or another pressurized gas, in the meatus 30. More precisely, the gas that is introduced in the meatus 30 is at a pressure that is higher than that hydrostatic working pressure that acts on the connection device 10 when it is assembled. Therefore, the pressure in the meatus 30 increases up to cause the separation of the two portions 10a and 10b, since it is less than the "section force" that kept them in the assembled configuration.

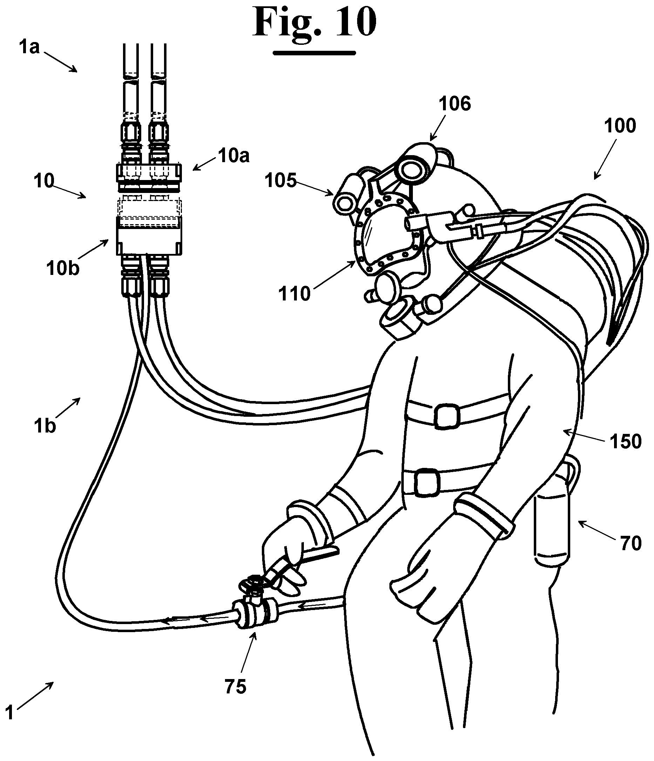

More in detail, as diagrammatically shown in Fig. 10, in order to operate the disengagement of the two portions 10a and 10b, the diver 100 can act on one, or more taps, or valves, 75 for pneumatically connecting the meatus 30 with a source 70 containing said pressurized gas and, therefore, starting the introduction of fluid in the meatus 30. This way, the separation is operated of portion 1a of the umbelical 1, i.e. that one on the side of the diving bell 250, from portion 1b, i.e. that one on the diver's side 100. The source 70 of pressurized gas can be, for example, a bottle of compressed gas also of minimum capacity, owing to the small volume of the interspace between the two portions 10a and 10b when they are assembled, with a pressure that is higher than a maximum working depth of the diver 100. For example, for works up to 200 metres of depth, bottles can be used of compressed air, or carbon dioxide used in the cycling field, or in the food field, that are typically loaded for example at 50 bar. However, it is necessary to use the right precautions for using this type of container in the adverse environment such as the sea to avoid corrosive processes of the container 70. Therefore, covers can be provided in which the source can be put, in order to reduce as much as possible the contact of the container with the sea water. Alternatively, the container 70 can be made of a material highly resistant to the corrosion.

As shown in Fig. 8, the electric cable 63, at the connection device 10, has an electric connector 80 arranged to connect the two portions 63a and 63b of the electric cable 63 same, i.e. the one upstream of and the one downstream of the connection device 10 same. The electric connector 80 consists of a male connector 81a comprising at least 8 pins 82 and arranged to engage with a female connector 81b comprising an identical number of holes 83, each of which arranged to house a respective pin 82. In particular, the at least 8 pins 82 comprise 4 pins for the audio transmission between the diver 100 and the support ship 200, 2 pins for feeding a lamp 105, for example mounted on the helmet 110, and other 2 pins for the electric supply of a video camera 106.

According to an aspect of the invention, but not shown in figure for reasons of simplicity, the thermal power necessary to bring the water flow to the predetermined temperature T* can be obtained by a fuel cell. Alternatively, the thermal power necessary to heat the water can be transferred to the flow of hot water in a different way.

A first alternative embodiment provides to use a "boiler for the depth". In practice, the necessary fuel, for example a small amount of liquefied petroleum gas (LPG), for example less than 10 Kg, is carried in depth and then the necessary volume of oxygen is provided to the burner.

Another possibility consists of producing the thermal power that is necessary to bring the flow of hot water to the temperature T* exploiting the exothermic reaction of transformation of iron in iron hydroxide. This solution is decidedly cheaper than the previous since provides the use of low-cost material, i.e. iron as "fuel" and oxygen dissolved in the water as "comburent". The catalyst may be, instead, constituted of water and salt, i.e. sea water.

According to the invention, between each cavity 51a, 51b, 52a, 52b, 54a and 54b made in the first and in the second portion 10a and 10b of the connection device 10 and the respective duct 61, 62 and 64 crossed, in use, by a fluid, such as the mixture of breathable gas, or the mixture breathed out, or the hot water used for heating the diving suit by the underwater worker 100, a sealing element 90 is provided.

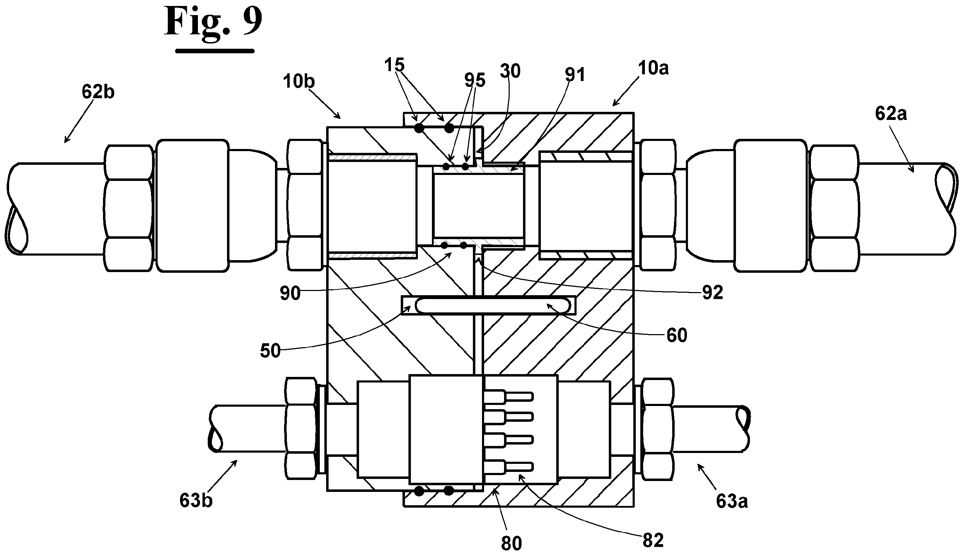

In a particularly advantageous exemplary embodiment, the sealing element 90 comprises a central portion 91 that is arranged, in use, between the first and the second portion 10a and 10b of the connection device 10 (Fig. 9). More in particular, the central portion has a flange 92, which, in operating conditions, i.e. when the connection device 10 is assembled, is tightened between the face 11a of the first portion and the face 11b of the second portion 1b, i.e. at the meatus 30.

More in detail, with reference in particular to the section view of Fig. 9, the central portion 91 is provided threaded, in order to be connected in a cavity, which is also this threaded, of one of the two portions of the connection device 10, for example the portion 10a. The sealing element 90 is, then, coupled to the other portion of the connection device 10, for example the second portion 10b, by means of at least two 0-rings 95 fitted in the corresponding part of the central portion 91 of the sealing element 90.

In the case shown in Fig. 9, the threaded part of the sealing element 90 is provided screwed to portion 10a, i.e. to the portion of the connection device 10 on the diving bell's side 250. Therefore, when the connection device 10 is positioned in the disassembled configuration, the portion 10b, i.e. that one on the diver's side 100, has a hole at each cavity 51b-56b. Still with reference to Fig. 9, between the first and the second portion 10a and 10b at least one reference element is provided, for example a bolt 60, or a key, arranged to couple in a housing 50 for precisely align the relative positions of the first and of the second portion 10a and 10b same, ensuring the correct mutual location and simplifying the assembling step of the connection device 10.

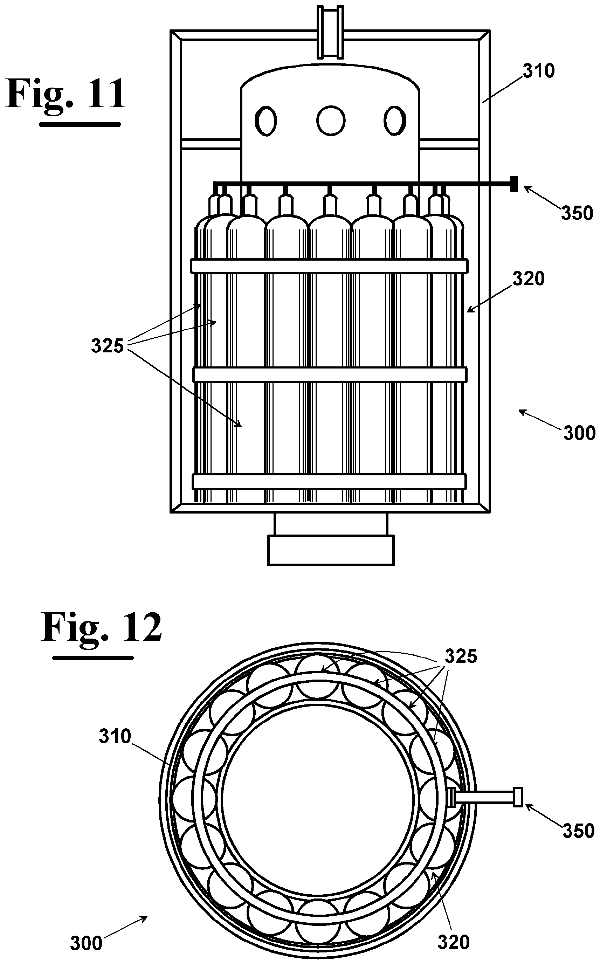

According to a further aspect of the invention, as shown in Figs. 11 and 12, an emergency unit 300 is provided comprising a support structure 310 on which a delivery unit 320 is installed comprising a plurality of bottles of compressed gas 325 containing the breathable mixture. The emergency unit 300 is also equipped with a fastening member 350 arranged to be connected to the portion 10b of the connection device, i.e. with that one on the diver's side 100, in order to cause the underwater worker 100 to be connected to the delivery unit and allowing, then, to him to breathe the above described breathable mixture. The emergency unit 300 can also be equipped with an electric connector arranged to be connected to the electric cable 63 of the connection device 10 allowing, then, the diver 100 to restore audio communication and to electrically supply the lamp 105.

In particular, the portion 10b, in the disassembled configuration of the connection device 10, has a plurality of holes 71b-76b at the face 11b. More in detail, through the above described holes, the portion 10b is adapted to be connected to the emergency unit 300 that, as described above, is provided with the bottles of compressed gas containing the breathable mixture, in addition to the connector for the communications and to the cables providing electric energy to the lamp arranged on the helmet 110 and, in case, the connection for hot water for the diving suit 150. The connection to the emergency unit 300 can be carried out arranging one at a time the respective duct and cable 61-66, i.e. prearranging a pre-wired female connector, on which the diver 100 puts the portion 10b of the connection device 10, i.e. the portion arranged on him/her side. In these conditions, the lock between the portion 10b of the connection device 10 and the connector 350 of the emergency unit 300 is assured with mechanical systems, for example, by means of a connection pin, which secures the portion 10b, for example a male member, and the female on the side of the emergency unit 300, through a hole arranged in the two parts, not shown in Fig. for reasons of simplicity.

In order to avoid that, once the disengagement of the two portions 10a and 10b has been carried out, sludge, sand, or other extraneous bodies, can enter in the ducts 61-66 connected to the portion of the connection device 10 on the diver's side 100 polluting the circuit of the breathable mixture and putting, then, in danger the safety of the diver 100, or jeopardizing the connection to the emergency unit 300, a protection cover 130 is also provided adapted to cover the connection device 10. In particular, the cover 130 is arranged to move from a cover configuration, in which it is substantially positioned on the connection device 10 when this is assembled, to a protection configuration, in which it covers the portion 10b of the connection device 10, i.e. that one on the diver's side 100, and precisely the face 11b equipped with the free holes 13. More in detail, the cover 130 is connected to the portion 10b, for example by means of a locking tie 135, and, therefore, when the disengagement of the portions 10a and 10b is caused, the cover 130 remains fixed to the portion 10b.

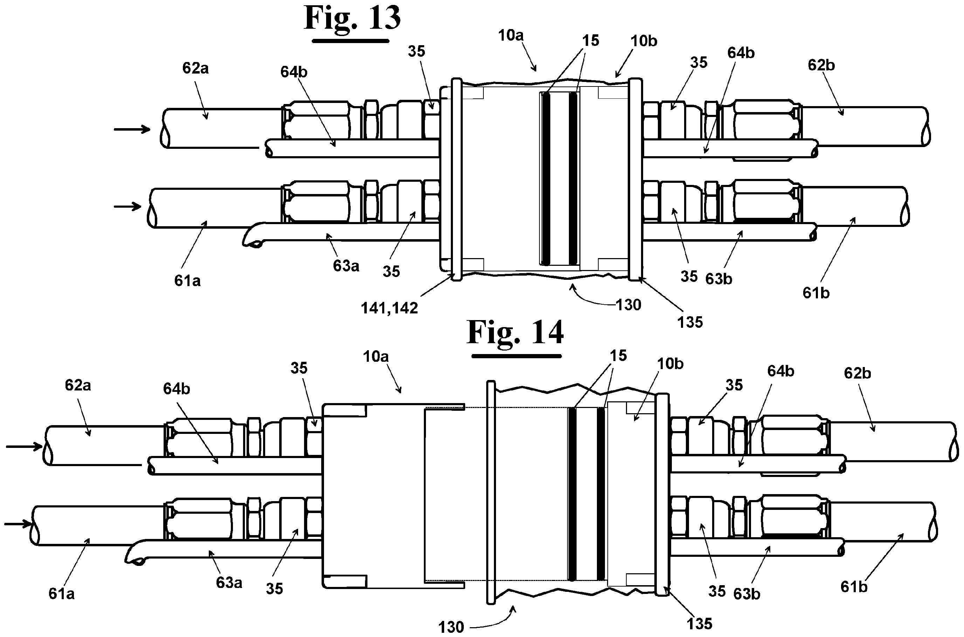

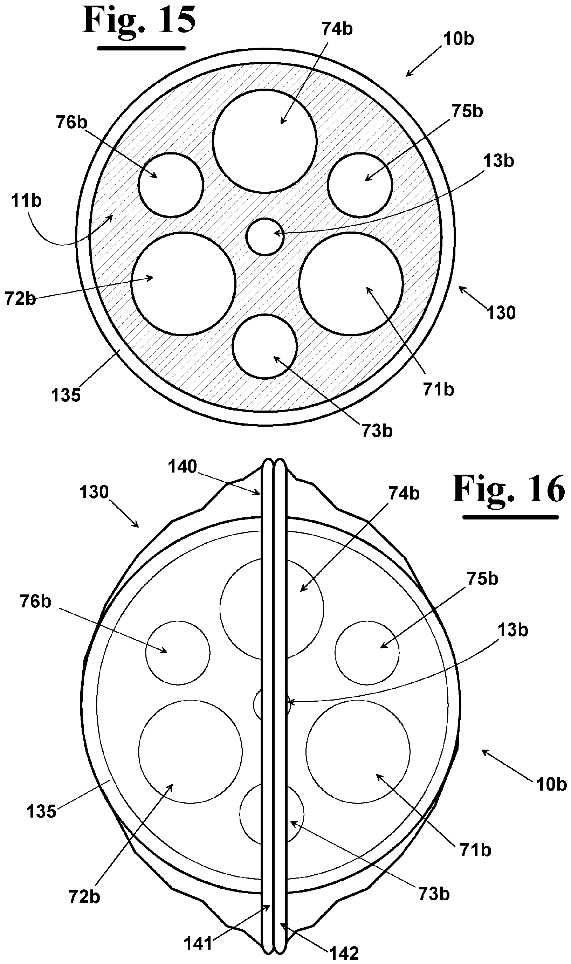

In an exemplary embodiment, the protection cover 130 is made of a flexible material, for example nylon, and has a support frame 140, for example made of a material having shape memory, that is arranged to move from the cover configuration, in which it is arranged on the outer surface of the connection device 10 and is forcedly kept in this configuration (Figs. 13 and 15), to a protection configuration, in which the cover 130 is arranged to cover the face 11b of the portion 10b of the connection device 10 provided with the above described free holes 71b-76b once that the disengagement of the two portions has been carried out (Figs. 14 and 16).

As diagrammatically shown in Figs. 13 and 14, at the portion 10a of the connection device 10, i.e. that one on the side of the diving bell 250, the cover 130 is provided fastened, for example glued, to a movable portion of said frame, consisting, for example, of two semicircles 141 and 142 made of plastic stiff material. These can be complied with the circumference of portion 10a, but they are ready to spring joining together in a flat shape (Fig. 16) as soon as the portion 10a slides away from the cover 130 at the moment of the release. This way, the portion 10b is protected against the mud and the sand, till when the diver 100 is not free to connect the portion 10b to the emergency unit 300.

The foregoing description of specific exemplary embodiments will so fully reveal the invention according to the conceptual point of view, so that others, by applying current knowledge, will be able to modify and/or adapt in various applications the specific exemplary embodiments without further research and without parting from the invention, and, accordingly, it is meant that such adaptations and modifications will have to be considered as equivalent to the specific embodiments. The means and the materials to realise the different functions described herein could have a different nature without, for this reason, departing from the field of the invention. it is to be understood that the phraseology or terminology that is employed herein is for the purpose of description and not of limitation.

## Claims

1. Structure of umbelical (1) arranged to connect a diver (100), in particular a CCD "Certified Commercial Diver", with a support ship (200) and/or with a safety diving bell (250), said structure of umbelical (1) comprising at least:
- a duct (61) crossed, in use, by a breathable gaseous mixture that is supplied to said diver (100);
- a duct (62) crossed, in use, by a breathed out flow produced by the diver (100) during the breathing of said breathable mixture;
- an electric cable (63) through which electric energy is supplied to the diver (100);
- a connection device (10) arranged to connect in a removable way a first portion (10a) of said umbelical (1) that, in use, is arranged on the side of the diving bell (250) and/or of the support ship (200), and a second portion (10b) of said umbelical (1) that, in use, is arranged on the diver's side (100), said first and said second portion (10a, 10b) being engaging with removable way, in order to move from a assembled configuration to a disassembled configuration, each of said first and of said second portion (10a, 10b) being equipped with a plurality of cavities (51-56), in each cavity (51-56) housing, in use, a respective portion of said ducts (61,62), or of said cable (63);
said structure of umbelical (1) **characterized in that** said connection device (10) is provided with at least one passage, or meatus (30), defined between a face of said first portion (10a) and a face of the second portion (10b) of said connection device (10) in said assembled configuration, said passage, or meatus (30), extending up to a hole made on the outer surface of said connection device (10), in said meatus a first predetermined pressure P1 being present, with P1 less, or equal, to the atmospheric pressure;
**and in that** said structure of umbelical (1) comprises, furthermore:
- a source (70) of a gas at a second predetermined pressure P2 with P2>P1;
- a valve (75) arranged to pneumatically connect, or disconnect, said source (70) of pressurized gas and said meatus (30), said valve for connecting, or disconnecting, arranged to connect said source (70) of gas with said meatus (30), in order to increase the pressure that is present in it and cause, then, the separation of said first portion (10a) from said second portion (10b) of said connection device (10) and then the movement of said connection device (10) from said assembled configuration to said disassembled configuration.

2. Structure of umbelical, according to claim 1, wherein in said meatus (30) a predetermined vacuum level is present, said predetermined vacuum level carried out by a suction device, with said connection device (10) arranged in said assembled configuration, i.e. with said first portion (10a) engaged with said second portion (10b).

3. Structure of umbelical, according to claim 2, wherein the outer surface (12a,12b) of said connection device (10) has a hole (13a,13b) of predetermined size in pneumatic connection with said meatus (30) through which said meatus (30) is adapted to be selectively put in pneumatic connection with said suction device, in order to provide said predetermined vacuum level inside of it and to ensure a steady fastening between said first and said second portion (10a, 10b), or with said source of pressurized gas (70), to provide the separation of said first portion (10a) from said second portion (10b).

4. Structure of umbelical, according to any one of the previous claims, wherein a sealing element is provided between each cavity of said first portion (10a) and of said second portion (10b) of said connection device (10) and the respective duct arranged to be crossed, in use, by a fluid.

5. Structure of umbelical, according to any one of the previous claims, wherein said sealing element comprises:
- a fastening portion arranged to be fixed to one between said first and said second portion of said connection device (10a, 10b) ;
- a central portion (91) that is arranged, in use, bridging said first portion (10a) and of said second portion (10b) of said connection device (10), said central portion being equipped with a flange (92) that, when said connection device (10) is assembled, is clamped between said face (11a) of said first portion (10a) and said face (11b) of said second portion (10b) that define said meatus (30).

6. Structure of umbelical, according to any one of the previous claims, wherein between said first portion (10a) and said second portion (10b) at least one reference element (60) is provided to precisely refer the relative positions of said first and of said second portion (10a, 10b) when said connection device (10) is mounted in order to ensure a correct mutual position.

7. Structure of umbelical, according to any one of the previous claims, also comprising a duct arranged to feed a flow of hot water at a predetermined temperature T* in canalisations, or interstices, made in the diving suit (150) worn by said diver (100), and wherein a device is provided for producing and transferring thermal power to said water flow up to bring it to said temperature T*.

8. Structure of umbelical, according to claim 7, wherein said device for producing and transferring thermal power is selected from the group consisting of:
- a fuel cell;
- a boiler suited for the depth;
- a reactor in which the exothermic reaction of iron into hydroxide is carried out.

9. Structure of umbelical, according to any one of the previous claims, wherein a protection cover (130) is further provided arranged to cover said face (11b) of said second portion (10b) of said connection device (10) when said first portion (10a) is separated from said second portion (10b), in order to prevent penetration of sand, sludge, or other material, through said holes (13) in said ducts coupled to said second portion (10b) of said connection device (10) jeopardizing the safety of the diver (100).

10. Structure of umbelical, according to claim 9, wherein said protection cover (130) is made of a flexible material and is constrained to a support frame (140) comprising:
- a fastening portion arranged to be fixed to said first portion (10a) of said connection device (10);
- a movable portion (141,142) that is arranged to move from a cover configuration, in which said movable portion (141,142) is arranged to encircle the outer surface of the connection device (10) when this is in said assembled configuration, to a protection configuration, in which said movable portion (141,142) is arranged to cover the face of the second portion (10b) of the connection device (10) preventing objects from penetrating in said ducts through said free holes (13) made in said face, when the connection device (10) is arranged in said disassembled configuration.

11. Structure of umbelical, according to claim 10, wherein said movable portion (141,142) is made of a material having shape memory and is arranged to pass from said cover configuration in which it is forcedly kept by said first portion (10a) of said connection device (10) in said assembled configuration, to said protection configuration in which said first portion (10a) of said connection device (10) disengages from said second portion (10b) and therefore said movable portion (141,142) is free to pass in said protection configuration.

12. Emergency unit (300) for assisting a diver (100) in a danger situation **characterized in that** it comprises:
- a structure of umbelical, according to any one of the previous claims;
- a support structure (310);
- a delivery unit (320) mounted on said support structure (310), said delivery unit (320) comprising a plurality of bottles (325) containing said mixture of breathable gas;
- a fastening member arranged to connect said delivery unit (320) with said second portion (10b) of said connection device (10), in such a way to allow the diver (100) to connect to said delivery unit (320) and, then, to allow the diver to breath the above described breathable mixture.

13. Emergency unit (300), according to claim 12, wherein said fastening member also comprises at least one electric connector (80) arranged to be connected to said electric cable (63) of said second portion of said connection device (10) to provide also electricity to the diver.

14. Emergency unit (300), according to claim 12, or 13, wherein said fastening member also comprises a duct arranged to engage with said feeding duct of hot water of said second portion of said connection device.

15. A system for assisting a diver **characterized in that** it comprises:
- a structure of umbelical (1), according to any claim from 1 to 11; and
- an emergency unit (300), according to any claim from 12 to 14.

## Patentansprüche

1. Bauweise eines Versorgungskabels (1), das angeordnet wird, um einen Taucher (100), im Besonderen einen "Geprüften gewerblichen Taucher "mit einem Hilfsschiff (200) und/oder mit einer Sicherheitstauchglocke (250) zu verbinden, wobei die Bauweise des Versorgungskabels (1) mindestens umfasst:
- eine Rohrleitung (61), die im Einsatz von einer atembaren Gasmischung durchquert wird, die dem Taucher (100) zugeführt wird;
- eine Rohrleitung (62), die im Einsatz von einer ausgeatmeten Strömung durchquert wird, die durch den Taucher (100) während des Atmens der atembaren Mischung erzeugt wird;
- ein elektrisches Kabel (63), durch das dem Taucher (100) elektrische Energie zugeführt wird;
- eine Verbindungsvorrichtung (10), die angeordnet wird, um in einer entfernbaren Weise einen ersten Abschnitt (10a) des Versorgungskabels (1), der im Einsatz auf der Seite der Tauchglocke (250) und/oder des Hilfsschiffs (200) angeordnet wird, und einen zweiten Abschnitt (10b) des Versorgungskabels (1), der im Einsatz auf der Taucherseite (100) angeordnet wird, zu verbinden, wobei der erste und der zweite Abschnitt (10a, 10b) auf entfernbare Weise gekuppelt werden, um sich von einer montierten Konfiguration in eine demontierte Konfiguration zu versetzen, wobei jeder des ersten und des zweiten Abschnitts (10a, 10b) mit einer Vielzahl von Hohlräumen (51 bis 56) versehen wird, wobei in jedem Hohlraum (51 bis 56) im Einsatz ein jeweiliger Abschnitt der Rohrleitungen (61, 62) oder des Kabels (63) aufgenommen wird;
wobei die Bauweise des Versorgungskabels (1) **dadurch gekennzeichnet** wird, dass die Verbindungsvorrichtung (10) mit mindestens einer Durchführung oder einem Gang (30) bereitgestellt wird, die bzw. der zwischen einer Fläche des ersten Abschnitts (10a) und einer Fläche des zweiten Abschnitts (10b) der Verbindungsvorrichtung (10) in der montierten Konfiguration definiert wird, wobei die Durchführung oder der Gang (30) sich bis zu einem auf der Außenfläche der Verbindungsvorrichtung (10) ausgebildeten Loch erstreckt, wobei in dem Gang ein erster vorgegebener Druck P1, mit P1 kleiner oder gleich dem atmosphärischen Druck, vorhanden ist;
und dass die Bauweise des Versorgungskabels (1) außerdem umfasst:
- eine Quelle (70) eines Gases mit einem zweiten vorgegebenen Druck P2 mit P2>P1;
- ein Ventil (75), das angeordnet wird, die Quelle (70) des Druckgases und den Gang (30) pneumatisch zu verbinden oder zu unterbrechen, wobei das Ventil zum Verbinden oder Trennen angeordnet wird, die Quelle (70) des Gases mit dem Gang (30) zu verbinden, um den Druck zu erhöhen, der im Inneren vorhanden ist und dann die Trennung des ersten Abschnitts (10a) von dem zweiten Abschnitt (10b) der Verbindungsvorrichtung (10) und dann die Verlagerung der Verbindungsvorrichtung (10) von der montierten Konfiguration zu der demontierten Konfiguration zu veranlassen.

2. Bauweise des Versorgungskabels nach Anspruch 1, wobei in dem Gang (30) ein vorgegebener Vakuumpegel vorhanden ist, wobei der vorgegebene Vakuumpegel mit der in der montierten Konfiguration angeordneten Verbindungsvorrichtung (10) durch eine Absaugvorrichtung ausgeführt wird, d.h. mit dem ersten Abschnitt (10a) eingekuppelt mit dem zweiten Abschnitt (10b).

3. Bauweise des Versorgungskabels nach Anspruch 2, wobei die Außenfläche (12a, 12b) der Verbindungsvorrichtung (10) ein Loch (13a, 13b) von vorgegebener Größe in pneumatischer Verbindung mit dem Gang (30) aufweist, durch das der Gang (30) angepasst wird, selektiv in pneumatische Verbindung mit der Absaugvorrichtung versetzt zu werden, um den vorgegebenen Vakuumpegel in seinem Inneren bereitzustellen und ein stationäres Befestigen zwischen dem ersten und dem zweiten Abschnitt (10a, 10b) oder mit der Quelle des Druckgases (70) sicherzustellen, um die Trennung des ersten Abschnitts (10a) von dem zweiten Abschnitt (10b) bereitzustellen.

4. Bauweise des Versorgungskabel nach einem der vorhergehenden Ansprüche, wobei ein Dichtungselement zwischen jedem Hohlraum des ersten Abschnitts (10a) und des zweiten Abschnitts (10b) der Verbindungsvorrichtung (10) und der jeweiligen Rohrleitung bereitgestellt wird, die angeordnet wird, im Einsatz durch ein Fluid durchquert zu werden.

5. Bauweise des Versorgungskabels nach einem der vorhergehenden Ansprüche, wobei das Dichtungselement umfasst:
- einen Befestigungsabschnitt, der angeordnet wird, an einem unter dem ersten und dem zweiten Abschnitt der Verbindungsvorrichtung (10a, 10b) befestigt zu werden;
- einen Zentralabschnitt (91), der im Einsatz angeordnet wird,
den ersten Abschnitt (10a) und den zweiten Abschnitt (10b) der Verbindungsvorrichtung (10) zu überbrücken, wobei der Zentralabschnitt mit einem Flansch (92) versehen wird, der zwischen die Fläche (11a) des ersten Abschnitts (10a) und die Fläche (11b) des zweiten Abschnitts (10b) geklemmt wird, die den Gang (30) definieren, wenn die Verbindungsvorrichtung (10) montiert wird.

6. Bauweise des Versorgungskabels nach einem der vorhergehenden Ansprüche, wobei zwischen dem ersten Abschnitt (10a) und dem zweiten Abschnitt (10b) mindestens ein Bezugselement (60) bereitgestellt wird, um die relativen Positionen des ersten und des zweiten Abschnitts (10a, 10b) genau zuzuweisen, wenn die Verbindungsvorrichtung (10) befestigt wird, um eine korrekte gegenseitige Position sicherzustellen.

7. Bauweise des Versorgungskabels nach einem der vorhergehenden Ansprüche, die auch eine Rohrleitung umfasst, die angeordnet wird, einen Warmwasserstrom mit einer vorgegebenen Temperatur T* in Rohrleitungen oder Zwischenräumen einzuspeisen, die in dem durch den Taucher (100) getragenen Taucheranzug (150) ausgebildet werden, und wobei eine Vorrichtung zum Erzeugen und Übertragen von thermischer Energie auf den Wasserstrom bereitgestellt wird, um ihn auf die Temperatur T* zu bringen.

8. Bauweise des Versorgungskabels nach Anspruch 7, wobei die Vorrichtung zum Erzeugen und Übertragen thermischer Energie aus der Gruppe ausgewählt wird, die besteht aus:
- einer Brennstoffzelle;
- einem für die Tiefe geeigneten Heizkessel;
- einem Reaktor, in dem die exotherme Reaktion von Eisen zu Hydroxid durchgeführt wird.

9. Bauweise des Versorgungskabels nach einem der vorhergehenden Ansprüche, wobei des Weiteren eine Schutzabdeckung (130) bereitgestellt wird, die angeordnet wird, die Fläche (11b) des zweiten Abschnitts (10b) der Verbindungsvorrichtung (10) abzudecken, wenn der erste Abschnitt (10a) von dem zweiten Abschnitt (10b) getrennt wird, um Eindringen von Sand, Schlamm oder anderem Material durch die Löcher (13) in die Rohrleitungen zu verhindern, die mit dem zweiten Abschnitt (10b) der Verbindungsvorrichtung (10) verbunden werden, das die Sicherheit des Tauchers (100) gefährdet.

10. Bauweise des Versorgungskabels nach Anspruch 9, wobei die Schutzabdeckung (130) aus einem flexiblen Material hergestellt wird und an einem Stützrahmen (140) gehalten wird, umfassend:
- einen Befestigungsabschnitt, der angeordnet wird, an den ersten Abschnitt (10a) der Verbindungsvorrichtung (10) befestigt zu werden;
- einen bewegbaren Abschnitt (141, 142), der angeordnet wird, sich von einer Abdeckungskonfiguration, in der der bewegliche Abschnitt (141, 142) angeordnet wird, die Außenfläche der Verbindungsvorrichtung (10) zu umschließen, wenn diese sich in der montierten Konfiguration befindet, zu einer Schutzkonfiguration zu versetzen, in der der bewegliche Abschnitt (141, 142) angeordnet wird, die Fläche des zweiten Abschnitts (10b) der Verbindungsvorrichtung (10) abzudecken, um Gegenstände am Eindringen in die Rohrleitungen durch die in der Fläche ausgebildeten freien Löcher (13) zu hindern, wenn die Verbindungsvorrichtung (10) in der demontierten Konfiguration angeordnet wird.

11. Bauweise des Versorgungskabels nach Anspruch 10, wobei der bewegliche Abschnitt (141, 142) aus einem Material mit Formgedächtnis hergestellt wird und angeordnet wird, von der Abdeckungskonfiguration, in der er zwangsweise durch den ersten Abschnitt (10a) der Verbindungsvorrichtung (10) in der montierten Konfiguration gehalten wird, zu der Schutzkonfiguration überzugehen, in der der erste Abschnitt (10a) der Verbindungsvorrichtung (10) sich von dem zweiten Abschnitt (10b) auskuppelt und daher der bewegliche Abschnitt (141, 142) frei ist, in die Schutzkonfiguration überzugehen.

12. Notfalleinheit (300) zum Unterstützen eines Tauchers (100) in einer Gefahrensituation, **dadurch gekennzeichnet, dass** sie umfasst:
- eine Bauweise des Versorgungskabels nach einem der vorhergehenden Ansprüche;
- eine Tragstruktur (310);
- eine Zurverfiigungstellungseinheit (320), die auf der Tragstruktur (310) befestigt wird, wobei die Zurverfiigungstellungseinheit (320) eine Vielzahl von Flaschen (325) umfasst, die die Mischung aus atembaren Gas enthalten;
- ein Befestigungselement, das angeordnet wird, die Zurverfügungstellungseinheit (320) mit dem zweiten Abschnitt (10b) der Verbindungsvorrichtung (10) zu verbinden, um dem Taucher (100) auf diese Weise zu erlauben, sich mit der Zurverfiigungstellungseinheit (320) zu verbinden und dann dem Taucher zu erlauben, die vorhergehend beschriebene atembare Mischung zu atmen.

13. Notfalleinheit (300) nach Anspruch 12, wobei das Befestigungselement auch mindestens einen elektrischen Verbinder (80) umfasst, der angeordnet wird, mit dem elektrischen Kabel (63) des zweiten Abschnitts der Verbindungsvorrichtung (10) verbunden zu werden, um für den Taucher auch Elektrizität bereitzustellen.

14. Notfalleinheit (300) nach Anspruch 12 oder 13, wobei das Befestigungselement auch eine Rohrleitung umfasst, die angeordnet wird, mit der Einspeiserohrleitung für warmes Wasser des zweiten Abschnitts der Verbindungsvorrichtung einzukuppeln.

15. System zum Unterstützen eines Tauchers, **dadurch gekennzeichnet, dass** es umfasst:
- eine Bauweise des Versorgungskabels (1) nach einem Anspruch von 1 bis 11; und
- eine Notfalleinheit (300) nach einem Anspruch von 12 bis 14.

## Revendications

1. Structure d'ombilical (1) agencée pour relier un plongeur (100), en particulier un « Plongeur professionnel certifié » (CCD), avec un navire de soutien (200) et/ou avec une cloche de plongée de sécurité (250), ladite structure d'ombilical (1) comprenant au moins :
- un conduit (61) traversé, lors de l'utilisation, par un mélange gazeux respirable fourni audit plongeur (100) ;
- un conduit (62), traversé, lors de l'utilisation, par un flux expiré produit par le plongeur (100) durant la respiration dudit mélange respirable ;
- un câble électrique (63) par lequel l'énergie électrique est fournie au plongeur (100) ;
- un dispositif de liaison (10) agencé pour relier de façon amovible, une première partie (10a) dudit ombilical (1) qui, lors de l'utilisation, est agencé sur le côté de la cloche de plongée (250) et/ou du navire de soutien (200), et une seconde partie (10b) dudit ombilical (1) qui, lors de l'utilisation, est agencé sur le côté du plongeur (100), lesdites première et seconde parties (10a, 10b) étant en prise de façon amovible, afin de passer d'une configuration assemblée à une configuration désassemblée, chacune desdites première et seconde parties (10a, 10b) étant équipée d'une pluralité de cavités (51 à 56), dans chaque cavité (51 à 56) logeant, lors de l'utilisation, une partie respective desdits conduits (61, 62) ou dudit câble (63) ;
ladite structure d'ombilical (1) **caractérisée en ce que** ledit de dispositif de liaison (10) est doté d'au moins un passage, ou canal (30), défini entre une face de ladite première partie (10a) et une face de la seconde partie (10b) dudit dispositif de liaison (10) dans ladite configuration assemblée, ledit passage, ou canal (30), s'étendant jusqu'à un trou ménagé sur la surface externe dudit dispositif de liaison (10), dans ledit canal une première pression prédéfinie P1 étant présente, avec P1 inférieure ou égale à la pression atmosphérique ;
et **en ce que** ladite structure d'ombilical (1) comprend en outre :
- une source (70) d'un gaz à une seconde pression prédéfinie P2 avec P2>P1 ;
- une soupape (75) agencée pour relier pneumatiquement, ou séparer, ladite source (70) de gaz sous pression et ledit canal (30), ladite soupape servant à relier, ou à séparer, agencée pour relier ladite source (70) de gaz avec ledit canal (30), afin d'augmenter la pression présente dans celui-ci et entraîner, alors, la séparation de ladite première partie (10a) de ladite seconde partie (10b) dudit dispositif de liaison (10) et puis le passage du dispositif de liaison (10) de ladite configuration assemblée à ladite configuration désassemblée.

2. Structure d'ombilical selon la revendication 1, dans ledit canal (30) un niveau de dépression prédéfini étant présent, ledit niveau de dépression prédéfini étant réalisé par un dispositif d'aspiration, ledit dispositif de liaison (10) étant agencé dans ladite configuration assemblée, c'est-à-dire avec ladite première partie (10a) en prise avec ladite seconde partie (10b).

3. Structure d'ombilical selon la revendication 2, ladite surface externe (12a, 12b) dudit dispositif de liaison (10) possédant un trou (13a, 13b) d'une taille prédéfinie en liaison pneumatique avec ledit canal (30) par l'intermédiaire duquel ledit canal (30) est conçu pour être mis sélectivement en liaison pneumatique avec ledit dispositif d'aspiration, afin de fournir ledit niveau de dépression prédéfini à l'intérieur de celui-ci et pour garantir une fixation stable entre lesdites première et seconde parties (10a, 10b), ou avec ladite source de gaz sous pression (70), pour obtenir la séparation de ladite première partie (10a) de ladite seconde partie (10b).

4. Structure d'ombilical selon l'une quelconque des revendications précédentes, un élément d'étanchéité étant disposé entre chaque cavité de ladite première partie (10a) et de ladite seconde partie (10b) dudit dispositif de liaison (10) et le conduit respectif agencé pour être traversé, lors de l'utilisation, par un fluide.

5. Structure d'ombilical selon l'une quelconque des revendications précédentes, ledit élément d'étanchéité comprenant :
- une partie de fixation agencée pour être fixée à l'une de ladite première et de ladite seconde partie dudit dispositif de liaison (10a, 10b) ;
- une partie centrale (91) agencée, lors de l'utilisation, joignant ladite première partie (10a) et ladite seconde partie (10b) dudit dispositif de liaison (10), ladite partie centrale étant équipée d'une bride (92) qui, lorsque ledit dispositif de liaison (10) est assemblé, est serré entre ladite face (1 la) de ladite première partie (10a) et ladite face (11b) de ladite seconde partie (10b) définissant ledit canal (30).

6. Structure d'ombilical selon l'une quelconque des revendications précédentes, entre ladite première partie (10a) et ladite seconde partie (10b) au moins un élément de référence (60) est disposé pour orienter précisément les positions relatives de ladite première et de ladite seconde partie (10a, 10b) lorsque ledit dispositif de liaison (10) est monté afin d'assurer une position mutuelle correcte.

7. Structure d'ombilical selon l'une quelconque des revendications précédentes, comprenant également un conduit agencé pour délivrer un flux d'eau chaude à une température prédéfinie T* dans des canalisations, ou des interstices, composant la combinaison de plongée (150) portée par ledit plongeur (100), et un dispositif étant fourni permettant la production et le transfert d'énergie thermique audit flux d'eau jusqu'à l'amener à ladite température T*.

8. Structure d'ombilical selon la revendication 7, ledit dispositif permettant la production et le transfert d'énergie thermique étant choisi dans le groupe constitué par :
- une pile à combustible ;
- une chaudière adaptée à la profondeur ;
- un réacteur dans lequel s'effectue la réaction exothermique du fer en hydroxyde.

9. Structure d'ombilical selon l'une quelconque des revendications précédentes, un cache de protection (130) étant fourni en outre, agencé pour couvrir ladite face (11b) de ladite seconde partie (10b) dudit dispositif de liaison (10) lorsque ladite première partie (10a) est séparée de ladite seconde partie (10b) afin d'empêcher la pénétration de sable, de boues ou de tout autre matériau par lesdits trous (13) dans lesdits conduits couplés à ladite seconde partie (10b) dudit dispositif de liaison (10) mettant en péril la sécurité du plongeur (100).

10. Structure d'ombilical selon la revendication 9, ledit cache de protection (130) étant constitué d'un matériau souple et étant retenu à un cadre de support (140) comprenant :
- une partie de fixation agencée pour être fixée à ladite première partie (10a) dudit dispositif de liaison (10) ;
- une partie mobile (141, 142) agencée pour passer d'une configuration de cache, dans laquelle ladite partie mobile (141, 142) est agencée pour envelopper la surface externe du dispositif de liaison (10) lorsqu'il est dans la configuration assemblée, à une configuration de protection, dans laquelle la partie mobile (141, 142) est agencée pour couvrir la face de la seconde partie (10b) du dispositif de liaison (10) empêchant des objets de pénétrer dans lesdits conduits par lesdits trous libres (13) ménagés dans ladite face, lorsque le dispositif de liaison (10) est agencé dans ladite configuration désassemblée.

11. Structure d'ombilical selon la revendication 10, ladite partie mobile (141, 142) étant constituée d'un matériau à mémoire de forme et étant agencée pour passer de la configuration de cache dans laquelle il est maintenu de force par ladite première partie (10a) du dispositif de liaison (10) dans ladite configuration assemblée, à ladite configuration de protection dans laquelle ladite première partie (10a) dudit dispositif de liaison (10) se désengage de ladite seconde partie (10b) et ladite partie mobile (141, 142) étant alors libre de passer dans ladite configuration de protection.

12. Unité d'urgence (300) permettant d'assister un plongeur (100) dans une situation de danger **caractérisée en ce qu'**elle comprend :
- une structure d'ombilical selon l'une quelconque des revendications précédentes,
- une structure de support (310) ;
- une unité d'approvisionnement (320) monté sur ladite structure de support (310), ladite unité d'approvisionnement (320) comprenant une pluralité de bouteilles (325) contenant ledit mélange de gaz respirable ;
- un élément de fixation agencé pour relier ladite unité d'approvisionnement (320) à ladite seconde partie (10b) dudit dispositif de liaison (10), de manière à permettre au plongeur (100) de se raccorder à ladite unité d'approvisionnement (320) et, ensuite, pour permettre au plongeur de respirer le mélange respirable décrit ci-dessus.

13. Unité d'urgence (300) selon la revendication 12, lesdits éléments de fixation comprenant également au moins un raccord électrique (80) agencé pour être relié audit câble électrique (63) de ladite seconde partie dudit dispositif de liaison (10) pour fournir également de l'électricité au plongeur.

14. Unité d'urgence (300) selon la revendication 12 ou 13, lesdits éléments de fixation comprenant également un conduit agencé pour venir en prise avec ledit conduit d'alimentation en eau chaude de ladite seconde partie dudit dispositif de liaison.

15. Système permettant d'assister un plongeur **caractérisé en ce qu'**il comprend :
- une structure d'ombilical (1) selon l'une quelconque des revendications 1 à 11 ; et
- une unité d'urgence (300) selon l'une quelconque des revendications 12 à 14.
